# EUROPEAN PATENT APPLICATION

(11) **EP 4 825 786 A2**
(43) Date of publication of application: **21.10.2026**
(21) Application number: 26203374.9
(22) Date of filing: 24.06.2021
(51) Int. Cl.: B66F 9/22, B66F 9/075, B60K 17/356, B60K 1/00, B60K 7/00, F16H 61/438, F04B 17/03

(54) **DRIVE SYSTEM**

(62) Document number(s) of the earlier application(s) in accordance with Art. 76 EPC: 21181522.0 / 4 108 624
(71) Applicant: Palfinger AG, 5101 Bergheim bei Salzburg (AT)
(72) Inventor: O'KEEFFE, Eric, Monaghan, H18 (IE)
(74) Representative: Torggler & Hofmann Patentanwälte - Innsbruck

(57) **Abstract**

Drive system for a lifting apparatus (1), in particular a forklift, with a hydraulic system comprising:
- at least one hydraulic pump (2) and
- at least one hydraulic motor (3) for at least one driven wheel (4) of the lifting apparatus (1) coupled to the at least one hydraulic pump (2) and
- at least one prime mover (5) coupled to the at least one hydraulic pump (2),
wherein the prime mover (5) is an electric motor, wherein the direction of rotation of the at least one hydraulic motor (3) is controlled by the prime mover (5).

## Description

The invention concerns a drive system for a lifting apparatus according to the preamble of claim 1 and a lifting apparatus with such a drive system.

Drive systems of the general kind comprise a hydraulic system with at least one hydraulic pump, at least one hydraulic motor for at least one driven wheel of the lifting apparatus and at least one prime mover coupled to the at least one hydraulic pump.

The prime mover, often a diesel- or gas-powered engine, may drive the least one hydraulic pump to achieve a flow of hydraulic fluid to the at least one hydraulic motor for at least one driven wheel. Due to their torque-speed characteristic, such prime movers in the form of diesel- or gas-powered engines need to run at a specified number of revolutions per minute to provide the necessary mechanical output power for propelling the lifting apparatus. Similar to diesel- or gas-powered cars, such prime movers also need to idle at a minimum number of revolutions per minute when the driven wheel is not being actively driven. A coupling and decoupling between such a prime mover and a hydraulic pump may be effected by a clutching mechanism or a variable displacement pump. Drive systems known in the art may comprise a transmission to match the motor's specified number of revolutions per minute to the hydraulic pump's specified number of revolutions per minute. Furthermore, prime movers in the form of diesel- or gas-powered engines have a preset direction of rotation, and it is therefore necessary to provide hydraulic valves or other flow reversal means to guide the flow of the pumped hydraulic fluid to control the direction of rotation of the hydraulic motor. Clutching mechanisms, transmissions and valves or other means for steering hydraulic fluid add to complexity, manufacturing and maintenance costs, weight and space requirement of the drive systems and lifting apparatuses with such drive systems known in the art. Energy efficiency and reliability are negatively impacted.

The purpose of the invention is to provide an improved drive system and an improved lifting apparatus, in particular a drive system and a lifting apparatus with reduced complexity and improved energy efficiency and reliability.

This is being achieved by a drive system according to the specifying portion of claim 1 and a lifting apparatus with such a drive system.

Embodiments of the invention are defined in the dependent claims.

The drive system may be suited for propelling a lifting apparatus that may comprise at least one driven wheel. Other embodiments of the drive system may involve two, three or four driven wheels.

The lifting apparatus may be provided in the form of a forklift, in particular a truck mounted forklift.

The drive system comprises a hydraulic system with at least the following components:
- at least one hydraulic pump
- at least one hydraulic motor for at least one driven wheel of the lifting apparatus that is directly or indirectly coupled to at least one hydraulic pump
- at least one prime mover coupled to the at least one hydraulic pump

The hydraulic pump may effect a flow of hydraulic fluid, for example hydraulic oil, to the at least one hydraulic motor for at least one driven wheel.

The at least one hydraulic motor for at least one driven wheel of the lifting apparatus may receive a flow of hydraulic fluid from the hydraulic pump, resulting in a rotation of the wheel that may depend on the rate and direction of flow of the hydraulic fluid.

The at least one prime mover may be coupled to the at least one hydraulic pump to drive the flow of hydraulic fluid.

Advantageously, the prime mover is provided in the form of an electric motor, wherein the direction of rotation of the at least one hydraulic motor is controlled by the prime mover.

The essentially linear torque-speed characteristics of an electric motor may allow such a prime mover to deliver the necessary torque for driving a hydraulic motor from a hydraulic pump both from a standstill and at a low number of revolutions per minute in either direction of rotation.

An electric motor therefore does not need to idle while the wheel is not being actively driven.

The direction of rotation of the at least one hydraulic motor may be directly coupled to the direction of rotation of the prime mover in form of an electric motor. A change of direction of rotation of the prime mover in form of an electric motor may therefore result in a change of direction of rotation of the at least one hydraulic motor.

A coupling of the direction of rotation of at least one hydraulic motor and the direction of rotation of the prime mover may be provided by a direct or indirect coupling of the prime mover and the at least one hydraulic pump. For instance, the motor shaft of the prime mover in form of the electric motor may be coupled to the shaft of the at least one hydraulic pump by a belt or chain drive, a simple fixed gearing, or a direct connection of the shafts.

Additional clutching mechanisms, transmissions and valves or other additional means for steering hydraulic fluid to change a direction of rotation of the at least one hydraulic motor are therefore not needed.

In a preferred embodiment, the speed of rotation of the at least one hydraulic motor is controlled by the prime mover. A coupling of the prime mover to the hydraulic pump may result in a direct correlation between both the direction of rotation and the speed of rotation of the prime mover and the rotation and the speed of rotation of the at least one hydraulic motor. There may therefore be a direct correlation between the movement of the prime mover and the movement of the hydraulic motor in regard to speed, torque, and direction of rotation.

Advantageously, the prime mover is directly coupled to the hydraulic pump. In other words, the at least one driven wheel is driven by a hydraulic motor coupled, for instance through hydraulic lines, to a hydraulic pump which is directly coupled to an electric motor.

A direct coupling between the prime mover and the hydraulic pump can be provided by mounting the motor shaft of the electrical motor to the pump shaft of the hydraulic pump.

The coupling may be effected without a clutching mechanism and without a gear reduction between the prime mover and the hydraulic pump.

A direct coupling between the prime mover and the hydraulic pump delivering hydraulic fluid to the hydraulic motor may allow a drive system with which the speed and direction of rotation of a driven wheel can be controlled through control of the prime mover. Such a drive system may be realized without any further need for a transmission or a valve system steering the flow of hydraulic fluid delivered to the hydraulic motor.

An electric drive system as described may be applied in lifting apparatuses for deliveries to urban areas such as beverage deliveries, nighttime or early morning deliveries requiring low-noise solutions, deliveries of building materials to inner-city areas and as well into underground car parks, leading to a reduction of noise and environmental pollution.

The drive system may further comprise an electrical energy storage, for example in form of a battery, for powering the electric motor and a motor controller to supply the electric motor with electrical energy from the energy storage.

In a preferred embodiment, the output flow and the direction of flow of hydraulic fluid in and out of the hydraulic pump is directly proportional to the rotation and the speed of rotation of the prime mover. The volume and the direction of flow of the hydraulic fluid delivered by the hydraulic pump to the hydraulic motor may be directly proportional to the rotation and the speed of rotation of the prime mover. There may therefore be a direct correlation between the movement of the prime mover and the movement of the hydraulic motor in regard to speed, torque and direction of rotation.

In a preferred embodiment, the hydraulic pump and the hydraulic motor form a closed hydraulic system. In such a closed hydraulic system, any fluid delivered from an output side of the hydraulic pump to the at least one hydraulic motor can be returned to an intake side of the hydraulic pump.

The hydraulic system may comprise pressure relief valves that release hydraulic fluid into a tank in case that the hydraulic pressure in the hydraulic system reaches a critical value. Such pressure relief mechanisms are known in the art.

In a preferred embodiment, the prime mover is a bidirectional electric motor with variable speed. Such a bidirectional electric motor may be designed for clockwise and counterclockwise rotation. The direction of rotation may be defined from a direction of view from the driven end side towards the motor. The electric motor may be configured to have a controllable speed of rotation.

In a preferred embodiment, the prime mover is coupled to the hydraulic pump with a fixed gear ratio. The volume of the output flow of the hydraulic pump that is driven by the prime mover may therefore be in a constant proportionality with the speed of rotation of the prime mover.

In a preferred embodiment, the prime mover is coupled to the at least one hydraulic motor with a fixed ratio. The coupling between the prime mover to the at least one hydraulic motor may be in an indirect manner, for example through the hydraulic pump that is coupled to the prime mover. The speed of rotation of the hydraulic motor may therefore be in a constant proportionality with the speed of rotation of the prime mover.

In a preferred embodiment, the drive system comprises one hydraulic pump and at least two hydraulic motors for at least two driven wheels, wherein the at least two hydraulic motors are connected to the hydraulic pump in parallel through at least one hydraulic flow divider and/or through at least one hydraulic flow splitter.

A hydraulic flow divider may distribute the flow of hydraulic fluid to the at least two hydraulic motors at a constant ratio.

A hydraulic flow splitter may generally split a single hydraulic line into two or more identical flow paths, for instance by use of a tee connector or several tee connectors.

In a preferred embodiment, the drive system may comprise at least one hydraulic pump and three hydraulic motors for three driven wheels.

In one embodiment, two or more motors may be connected through at least one hydraulic flow divider that may distribute the flow of hydraulic fluid to the hydraulic motors in a way that hydraulic fluid is delivered to each of the hydraulic motors at the same hydraulic flow rate. The flow rate may depend on the setting and connection of the at least one hydraulic flow divider. In that case the volume of hydraulic fluid delivered to each motor will not depend on the load on each hydraulic motor. The hydraulic flow divider may therefore act as a hydraulic differential lock for the hydraulic motors for use in slippery or muddy conditions so traction can be maintained. The speed of rotation of the hydraulic motors may therefore be in dependency of the speed of rotation of the prime mover and the distribution of hydraulic fluid by the hydraulic flow divider.

For a lifting apparatus with two or more driven wheels driving along a path in normal conditions, the speed of rotation of each driven wheel may for example vary in accordance with the curve radius of wheel's path. Allowing the distribution of hydraulic fluid depending on pressure may enable that each hydraulic motor, and therefore each wheel, can have differing speeds of rotation depending for instance of the angle of steer. In such an embodiment, two or more motors may be connected in parallel through at least one hydraulic flow splitter. A parallel connection of the motors through a hydraulic flow splitter may act as a hydraulic differential (alternatively referred to as an open hydraulic differential lock), wherein fluid with the same hydraulic pressure is delivered to each of the hydraulic motors, and a rotation speed of each hydraulic motor may develop according to the hydraulic motor's load. The speed of rotation of each of the hydraulic motors may therefore be in dependency of the speed of rotation of the prime mover and the load on each of the hydraulic motors.

The hydraulic flow divider may in particular be provided as a proportional flow divider that divides a hydraulic flow in two or more output flows at a certain fixed or adjustable flow ratio. Such a hydraulic flow divider is also referred to as a pressure compensated flow divider.

In a preferred embodiment, the hydraulic pump is a fixed displacement pump. A fixed displacement pump conveys a constant volume of hydraulic fluid per revolution. In a drive system with the prime mover coupled to a fixed displacement pump, the speed and direction of rotation of the prime mover can be constantly proportional to the volume and direction of flow of hydraulic fluid delivered by the hydraulic pump.

In a preferred embodiment, the at least one driven wheel of the drive system is decelerated by a reduction of speed of rotation of the at least one hydraulic motor through utilizing the prime mover as a generator. In conventional drive systems, the kinetic energy of a moving lifting apparatus or a rotating driven wheel is converted into heat by braking the wheel with a friction-based or hydraulic braking system. By using the kinetic energy of a moving lifting apparatus or a rotating driven wheel to operate a hydraulic motor as a pump that delivers a flow of hydraulic fluid to a hydraulic pump that is coupled to a prime mover in form of an electric motor, said electric motor may be used as a generator to convert kinetic energy into electrical energy, which may be stored and/or dissipated as heat or by other means. The electric motor may thus be used as a load for the hydraulic motor, effectively taking kinetic energy out of the system and reducing the speed of rotation of the at least one hydraulic motor.

In a preferred embodiment, the drive system comprises an electrical energy storage that is charged when the prime mover is utilized as a generator. The electrical energy storage may be provided in form of a capacitor and/or a battery. Said battery may be the drive system's main battery or it may be provided as a separate battery.

In a preferred embodiment, the prime mover is arranged spatially separate from the at least one hydraulic motor. The hydraulic motor may be provided in a hub of the driven wheel or adjacent to a driven wheel. The prime mover may be arranged at a distance remote from the hydraulic motor.

Similarly, the hydraulic pump may be arranged spatially separate from the at least one hydraulic motor. The hydraulic motor may be connected to the hydraulic pump through hydraulic lines.

Protection is also sought for a lifting apparatus comprising a drive system as described above. The lifting apparatus may comprise a drive system with one or more hydraulic motors for one or more driven wheels. The driven wheel may be a ground-engaging wheel or a drive wheel of a tracked vehicle.

The drive system as described above may be utilized with a lifting apparatus such as an aerial work platform or a crane.

In particular, the drive system as described above may be utilized with a lifting apparatus in form of a forklift.

Embodiments of the invention are shown in the figures, wherein:
Fig. 1 shows a hydraulic circuit schematic of an embodiment of a drive system with one hydraulic motor,
Fig. 2 shows a hydraulic circuit schematic of an embodiment of a drive system with three hydraulic motors,
Fig. 3 shows an enclosure for parts of an embodiment of the drive system in a cutaway view,
Fig. 4 shows a perspective view of an enclosure for parts of an embodiment of the drive system,
Fig. 5 shows a plan view of an enclosure for parts of an embodiment of the drive system,
Fig. 6 shows a perspective view of an embodiment of a lifting apparatus, and
Fig. 7 shows a further perspective view of an embodiment of a lifting apparatus.

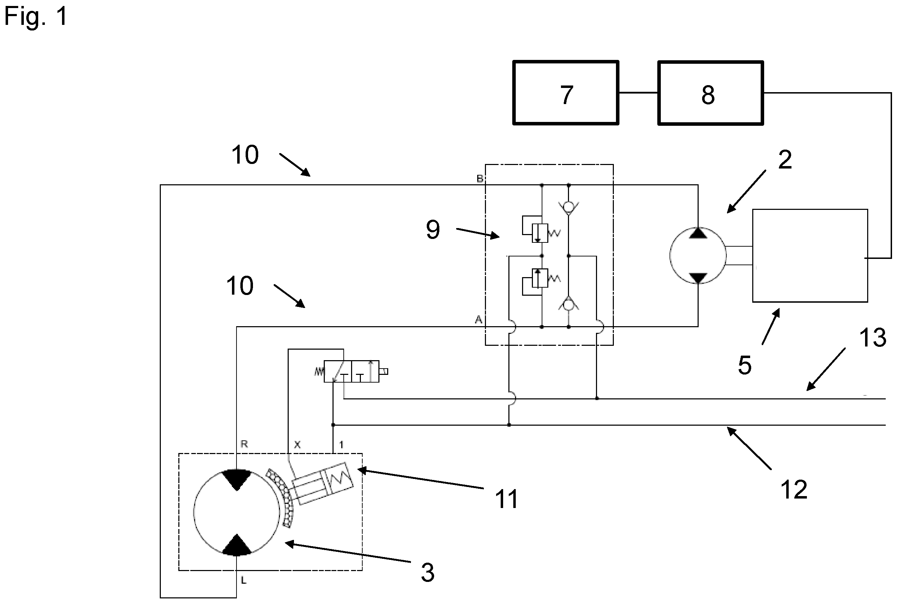

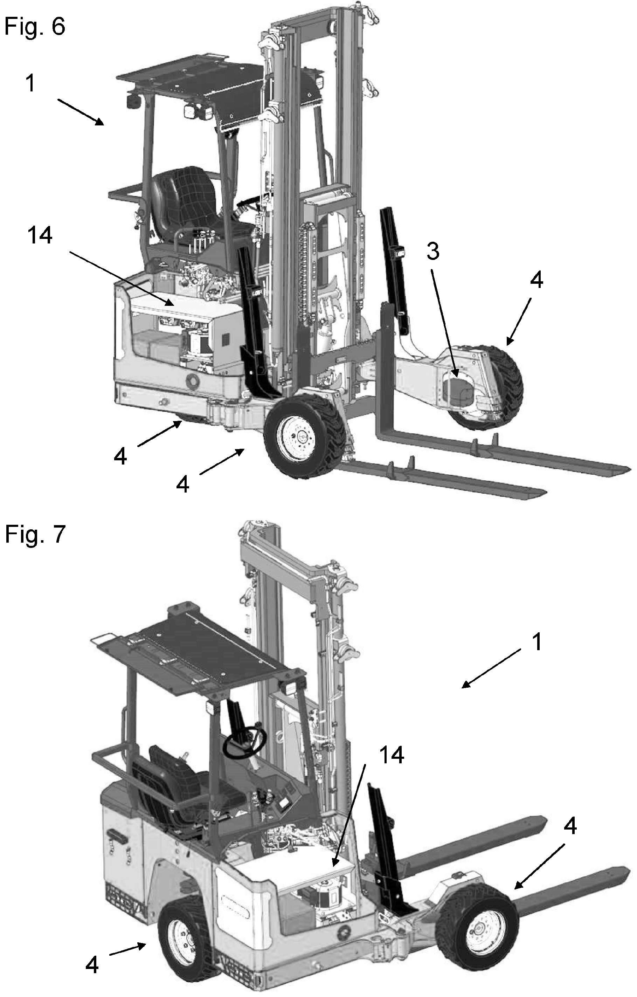

Figure 1 shows a hydraulic circuit schematic of an embodiment of a drive system comprising a hydraulic system with one hydraulic pump 2 and one hydraulic motor 3 for at least one driven wheel 4 of a lifting apparatus 1 (see figures 6 and 7), and one prime mover 5 in the form of an electric motor. The prime mover 5 is coupled to the hydraulic pump 2. The prime mover 5 may preferably be provided in the form of a bidirectional electric motor with variable speed, and the hydraulic pump 2 may be provided in the form of a fixed displacement pump.

In this embodiment, the hydraulic system further comprises hydraulic lines 10 that connect the hydraulic motor 3 to the hydraulic pump 2, wherein in this embodiment the hydraulic pump 2, the hydraulic lines 10 and the hydraulic motor 3 form a closed hydraulic system.

The prime mover 5 may be arranged spatially separate from the hydraulic motor 3. In particular, through the connection via the hydraulic line 10, both the prime mover 5 and the hydraulic pump 2 may be arranged spatially separate from the hydraulic motor 3.

As shown, the hydraulic system may comprise pressure relief valves 9 that may release hydraulic fluid into a tank (not shown) through a discharge line 12 in case that the hydraulic pressure in the hydraulic system reaches a critical value.

The hydraulic motor 3 may comprise a parking brake 11 that can be disengaged by supplying pressurized hydraulic fluid to the charge line 13.

The hydraulic system may be charged with hydraulic fluid though the charge line 13, for example to compensate for hydraulic leakages in the system.

As can be seen from the circuit schematic, the direction of rotation and the speed of rotation of the at least one hydraulic motor 3 is controlled by the prime mover 5.

Specifically, through the direct or indirect coupling of prime mover 5 in form of the electrical motor to the hydraulic pump 2, the output flow and the direction of flow of hydraulic fluid in and out of the hydraulic pump 2 is directly proportional to the direction of rotation and the speed of rotation of the prime mover 5.

In general, a coupling of the direction of rotation of at least one hydraulic motor 3 and the direction of rotation of the prime mover 5 may be provided by a direct or indirect coupling of the prime mover 5 and the at least one hydraulic pump 2. For instance, the motor shaft of the prime mover 5 in form of the electric motor may be coupled to the shaft of the at least one hydraulic pump 2 by a belt or chain drive, a simple fixed gearing, or a direct connection of the shafts. As shown in this embodiment, a direct coupling may for instance be realized by mounting the motor shaft of the prime mover 5 in form of the electrical motor to the pump shaft of the hydraulic pump 2.

In the embodiment of figure 1, the prime mover 5 is directly coupled to the hydraulic pump 2 with a fixed gear ratio of 1:1.

By coupling the prime mover 5 to the hydraulic pump 2 and by coupling the hydraulic motor 3 to the hydraulic pump 2 through hydraulic lines 10, the prime mover 5 is coupled to the at least one hydraulic motor 3 with a fixed gear ratio.

The prime mover 5 in form of the electric motor can be controlled by a controller 8 which controls the supply of electrical energy from an energy storage 7. The controller 8 may be coupled to the human-machine-interface such as a gas pedal or a joystick that allows an operator to control the speed of rotation and the direction of rotation of the prime mover 5 - and therefore the hydraulic motor 2 and the driven wheel 4 - through the controller 8.

It can also be seen from the circuit schematic that the hydraulic motor 3 - and therefore the driven wheel 4 - of the drive system can be decelerated by a reduction of speed of rotation of the at least one hydraulic motor 3 through utilizing the prime mover 5 as a generator. When the prime mover 5 is used as the generator, kinetic energy taken out of the system may be stored as electrical energy in the electrical energy storage 7.

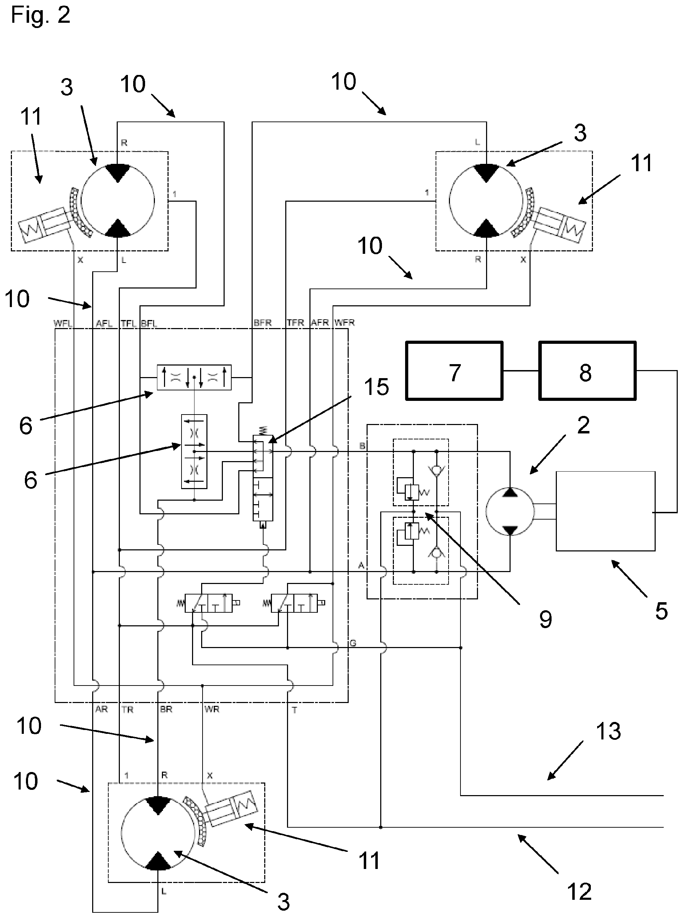

Figure 2 shows a hydraulic circuit schematic of an embodiment of a drive system which is partly based on the embodiment of figure 1, but comprises one hydraulic pump 2 and three hydraulic motors 3 for at least three driven wheels 4 of a lifting apparatus 1 (also see figures 6 and 7).

In the embodiment of figure 2, the drive system comprises one hydraulic pump 2 and three hydraulic motors 3. The hydraulic motors 3 may be switched between a parallel connection to the hydraulic pump 2 through at least one hydraulic flow divider 6, and a parallel connection to the hydraulic pump 2 through a hydraulic flow splitter 15. As shown, the hydraulic motors 3 are connected through the hydraulic flow splitter 15, effectively bypassing the hydraulic flow dividers 6.

A parallel connection of the motors 3 through a hydraulic flow splitter 15 may act as a hydraulic differential (alternatively referred to as an open hydraulic differential lock), wherein fluid with the same hydraulic pressure is delivered to each of the hydraulic motors 3, and a rotation speed of each hydraulic motor 3 may develop according to the hydraulic motor's load. The speed of rotation of each of the hydraulic motors 3 may therefore be in dependency of the speed of rotation of the prime mover 5 and the load on each of the hydraulic motors 3.

With a parallel connection of the motors 3 through the hydraulic flow dividers 6, hydraulic fluid may be delivered to each of the hydraulic motors 3 at the same hydraulic flow rate. The flow rate may depend on the internal setting and connection of the hydraulic flow dividers 6. The hydraulic flow dividers 6 may act as a hydraulic differential lock for the hydraulic motors 3. The speed of rotation of the hydraulic motors 3 may therefore be in dependency of the speed of rotation of the prime mover 5 and the distribution of hydraulic fluid by the hydraulic flow dividers 6.

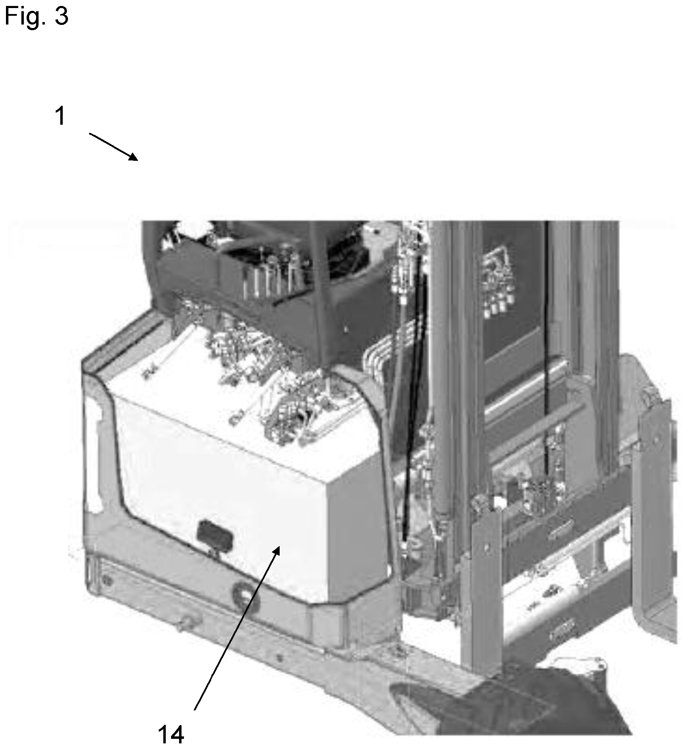

Figure 3 shows a detailed view of an embodiment of the lifting apparatus 1 in form of a forklift with an enclosure 14 that may house parts of the hydraulic drive system. Figures 6 and 7 show a full view of the same embodiment.

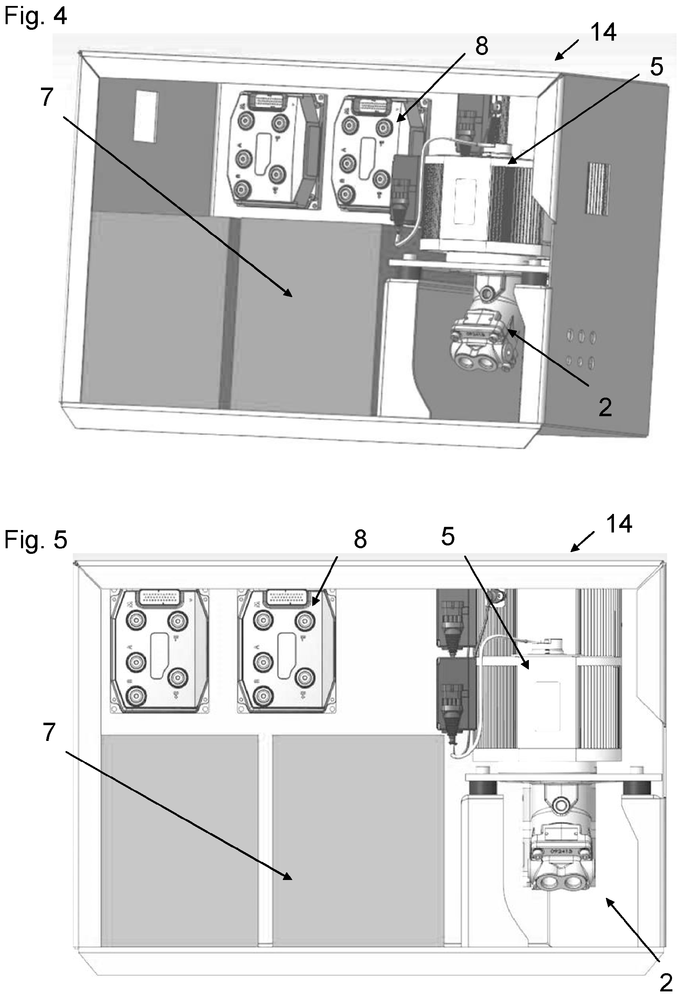

Figures 4 and 5 show a perspective and a plan view of the enclosure 14. The enclosure 14 may house the prime mover 5 in form of an electric motor and the hydraulic pump 2, as well as the controller 8 of the electric motor and the electrical energy storage 7. The enclosure 14 and the associated components may be arranged spatially separate from the hydraulic motors 3.

Figures 6 and 7 show perspective views of an embodiment of a lifting apparatus 1 in form of a forklift with three driven wheels 4.

In this embodiment, the lifting apparatus 1 comprises a drive system with a hydraulic system with three driven wheels 4. Each of the driven wheels 4 is driven by a hydraulic motor 3 (of which only one is visible in figure 6). The lifting apparatus 1 may comprise a drive system analogous to the embodiment shown in figure 2. Alternatively, the lifting apparatus may comprise only a single driven wheel 4 and may consequently comprise a drive system analogous to the embodiment shown in figure 1.

### List of reference numerals:

- 1: lifting apparatus
- 2: hydraulic pump
- 3: hydraulic motor
- 4: driven wheel
- 5: prime mover
- 6: hydraulic flow divider
- 7: energy storage
- 8: controller
- 9: relief valves
- 10: hydraulic line
- 11: parking brake
- 12: discharge line
- 13: discharge line
- 14: enclosure
- 15: hydraulic flow splitter

## Claims

1. Drive system for a lifting apparatus (1), in particular a forklift, with a hydraulic system comprising:
- at least one hydraulic pump (2) and
- at least one hydraulic motor (3) for at least one driven wheel (4) of the lifting apparatus (1) coupled to the at least one hydraulic pump (2) and
- at least one prime mover (5) coupled to the at least one hydraulic pump (2),
**characterized in that** the prime mover (5) is an electric motor, wherein the direction of rotation of the at least one hydraulic motor (3) is controlled by the prime mover (5).

2. Drive system according to claim 1, wherein the speed of rotation of the at least one hydraulic motor (3) is controlled by the prime mover (5).

3. Drive system according to one of the preceding claims, wherein the prime mover (5) is directly coupled to the hydraulic pump (2).

4. Drive system according to one of the preceding claims, wherein the output flow and the direction of flow of hydraulic fluid in and out of the hydraulic pump (2) is directly proportional to the rotation and the speed of rotation of the prime mover (5).

5. Drive system according to one of the preceding claims, wherein the hydraulic pump (2) and the hydraulic motor (3) form a closed hydraulic system.

6. Drive system according to one of the preceding claims, wherein the prime mover (5) is a bidirectional electric motor with variable speed.

7. Drive system according to one of the preceding claims, wherein the prime mover (5) is coupled to the hydraulic pump (2) with a fixed gear ratio.

8. Drive system according to one of the preceding claims, wherein the prime mover (5) is coupled to the at least one hydraulic motor (3) with a fixed ratio.

9. Drive system according to one of the preceding claims, wherein the drive system comprises one hydraulic pump (2) and at least two hydraulic motors (3) for at least two driven wheels, wherein the at least two hydraulic motors (3) are connected to the hydraulic pump (2) in parallel through at least one hydraulic flow divider (6) and/or at least one hydraulic flow splitter (15).

10. Drive system according to one of the preceding claims, wherein the hydraulic pump (2) is a fixed displacement pump.

11. Drive system according to one of the preceding claims, wherein the least one driven wheel of the drive system can be decelerated by a reduction of speed of rotation of the at least one hydraulic motor (3) through utilizing the prime mover (5) as a generator.

12. Drive system according to the preceding claim, wherein the drive system comprises an electrical energy storage (7) that is charged when the prime mover (5) is utilized as a generator.

13. Drive system according to one of the preceding claims, wherein the prime mover (5) is arranged spatially separate from the at least one hydraulic motor (3).

14. Drive system according to one of the preceding claims, wherein the hydraulic pump (2) is arranged spatially separate from the at least one hydraulic motor (3).

15. Lifting apparatus (1), in particular a forklift, comprising a drive system according to one of the preceding claims.
